(19) **Europäisches Patentamt / European Patent Office / Office européen des brevets**

(11) **EP 1 763 252 B1**

(12) **EUROPEAN PATENT SPECIFICATION**

(45) Date of publication and mention of the grant of the patent:
**08.08.2012 Bulletin 2012/32**

(51) Int Cl.:
***H04N 7/26*** (2006.01)

(21) Application number: **05755615.1**

(22) Date of filing: **29.06.2005**

(86) International application number:
**PCT/JP2005/011989**

(87) International publication number:
**WO 2006/001485 (05.01.2006 Gazette 2006/01)**

(54) **MOTION PREDICTION COMPENSATION METHOD AND MOTION PREDICTION COMPENSATION DEVICE**

BEWEGUNGSPRÄDIKTIONS-KOMPENSATIONSVERFAHREN UND BEWEGUNGSPRÄDIKTIONS-KOMPENSATIONSEINRICHTUNG

MÉTHODE DE COMPENSATION DE PRÉDICTION DE MOUVEMENT ET DISPOSITIF DE COMPENSATION DE PRÉDICTION DE MOUVEMENT

(84) Designated Contracting States:
**DE FR GB**

(30) Priority: **29.06.2004 JP 2004191937**

(43) Date of publication of application:
**14.03.2007 Bulletin 2007/11**

(73) Proprietor: **Sony Corporation
Tokyo 141-0001 (JP)**

(72) Inventors:
• **TSUCHIYA, Toshiharu,
c/o SONY CORPORATION
Tokyo 1410001 (JP)**
• **WADA, Toru,
c/o SONY CORPORATION
Tokyo 1410001 (JP)**
• **SATO, Kazushi,
c/o SONY CORPORATION
Tokyo 1410001 (JP)**
• **YAMADA, Makoto,
c/o SONY CORPORATION
Tokyo 1410001 (JP)**

(74) Representative: **Mills, Julia et al
D Young & Co LLP
120 Holborn
London EC1N 2DY (GB)**

(56) References cited:
JP-A- 4 127 689     JP-A- 7 274 182
JP-A- 2003 284 091  JP-A- 2004 023 458
JP-A- 2004 056 824  JP-A- 2004 128 749
JP-A- 2004 147 328

• ARUN NETRAVALI ET AL: "A CODEC FOR HDTV" IEEE TRANSACTIONS ON CONSUMER ELECTRONICS, IEEE SERVICE CENTER, NEW YORK, NY, US LNKD- DOI:10.1109/30.156704, vol. 38, no. 3, 1 August 1992 (1992-08-01) , pages 325-340, XP000311862 ISSN: 0098-3063
• PENG YIN ET AL: "Fast mode decision and motion estimation for JVT/H.264" PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE PISCATAWAY, NJ, USA, vol. 3, 14 September 2003 (2003-09-14), pages 853-856, XP010669968 ISBN: 978-0-7803-7750-9
• DUFAUX F ET AL: "MOTION ESTIMATION TECHNIQUES FOR DIGITAL TV: A REVIEW AND A NEW CONTRIBUTION" PROCEEDINGS OF THE IEEE, IEEE. NEW YORK, US LNKD- DOI: 10.1109/5.387089, vol. 83, no. 6, 1 June 1995 (1995-06-01), pages 858-875, XP000518740 ISSN: 0018-9219

**Description**

Technical Field

The present invention relates to a motion compensation prediction method and a motion compensation prediction apparatus (prediction method and apparatus using motion compensation), and is suitable when applied to an image information encoding apparatus used in receiving image information (bit stream) compressed by orthogonal transform such as Discrete Cosine Transform or Karhunen-Loeve Transform and motion compensation, etc. through network media such as broadcasting satellite service, cable TV (television), Internet and/or mobile telephone, etc. as in, e.g., MPEG, H.26x, etc., or in processing such compressed image information on storage or memory media such as optical/magnetic disc and/or flash memory.

Background Art

For example, as disclosed in the Japanese Patent Laid Open No. 2004-56827 publication, etc., in recent years, apparatuses in conformity with MPEG, etc. in which image information are dealt as digital information to compress such image information by orthogonal transform such as Discrete Cosine Transform, etc. and motion compensation by utilizing specific redundancy of image information for the purpose of realizing efficient transmission and/or storage of information in that instance are being popularized at both distribution at broadcasting station, etc. and general home.

Particularly, MPEG2 (ISO/IEC 13818-2) is defined as widely used image encoding system, and is widely used in broad application of professional use purpose and consumer use purpose at the standard for converting both interlaced scanning image and sequential scanning image, and standard resolution image and high definition image. By using the MPEG2 compression system, for example, in the case of interlaced scanning image of standard resolution having 720 × 480 pixels, code quantity (bit rate) of 4 - 8 Mbps is assigned, and in the case of scanning image of high resolution having 1920 × 1088 pixels, code quantity of 18 - 22 Mbps is assigned so that realization of high compression factor and satisfactory picture quality can be performed.

The MPEG2 is directed to high picture quality encoding adapted to mainly broadcasting, but was not complied with the encoding system having code quantity (bit rate) lower than that of the MPEG1, i.e., higher compression factor (ratio). It is predicted that such needs of encoding system is increased in future by popularization of mobile terminals. In correspondence therewith, standardization of MPEG4 encoding system has been performed. In connection with the image encoding system, its standard was approved in the International Standard as ISO/IEC 14496-2 on December in 1998.

Further, in recent years, for the purpose of realizing image encoding for television conference in the beginning, realization of the standard (standardization) of H. 26L (ITU-T Q6/16 VCEG) is being developed. It is known that while large operation quantity is required in encoding/decoding therefor by H. 26L, as compared to conventional encoding systems such as MPEG2 or MPEG4, higher encoding efficiency is realized. Moreover, at present, as a part of activity of the MPEG4, standardization such that functions which cannot be supported by the H. 26L are also taken in with the above-mentioned H. 26L being as base to realize higher encoding efficiency is being performed as Joint Model of Enhanced-Compression Video Coding. As the schedule of the Standardization, the above standardization was considered as the International Standard named H. 264 and MPEG-4 Part 10 Advanced Video Coding (which will be referred to as AVC hereinafter) on March in 2003.

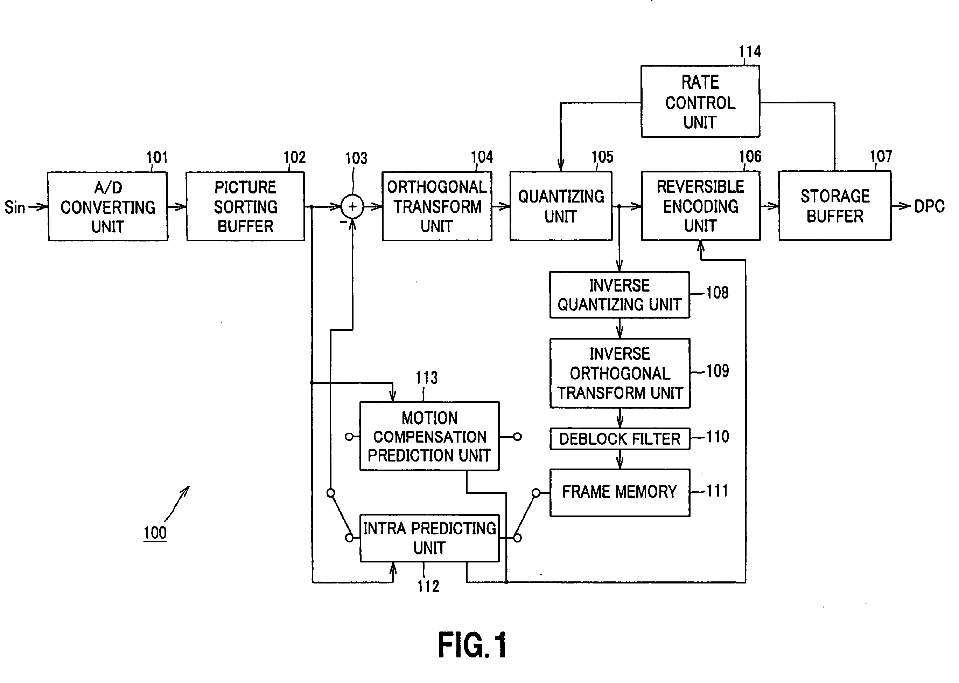

An example of the configuration of an image information encoding apparatus 100 adapted to output image compressed information DPC based on the AVC standard is shown, as block diagram, in FIG. 1.

The image information encoding apparatus 100 is composed of an A/D converting unit 1 supplied with an image signal Sin serving as input, a picture sorting buffer 102 supplied with image data digitized by the A/D converting unit 101, an adder 103 supplied with the image data which has been read out from the picture sorting buffer 102, an intra-predicting unit 112, a motion compensation prediction unit 113, an orthogonal transform unit 104 supplied with an output of the adder 103, a quantizing unit 105 supplied with an output of the orthogonal transform unit 104, a reversible encoding unit 106 and an inverse-quantizing unit 108 which are supplied with an output of the quantizing unit 105, a storage buffer 107 supplied with an output of the reversible encoding unit 106, an inverse orthogonal transform unit 109 supplied with an output of the inverse quantizing unit 108, a deblock filter 110 supplied with an output of the inverse orthogonal transform unit 109, a frame memory 111 supplied with an output of the deblock filter 110, and a rate control unit 114 supplied with an output of the storage buffer 107, etc.

In the image information encoding apparatus 100, an image signal serving as an input is first converted into a digital signal at the A/D converting unit 101. Then, sorting of frames is performed at the picture sorting buffer 102 in accordance with GOP (Group of Pictures) structure of image compressed information DPC serving as an output. In connection with image subject to intra-encoding, difference information between an input image and a pixel value generated by the intra predicting unit 112 is inputted to the orthogonal transform unit 104, at which orthogonal transform such as Discrete Cosine Transform or Karhunen-Loeve Transform, etc. is implemented. Transform coefficients obtained as an output of the orthogonal transform unit 104 are caused to undergo quantization processing at the quantizing unit 105. The quantized transform coefficients obtained as an output of the quantizing unit 105 are inputted to the reversible transform unit 106, at which reversible encoding such as variable length encoding or arithmetic encoding, etc. is implemented. Thereafter, they are stored into the storage buffer 107, and are outputted as image compressed information DPC. The behavior of the quantizing unit 105 is controlled by the rate control unit 114. At the same time, quantized transform coefficients obtained as an output of the quantizing unit 105 are inputted to an inverse quantizing unit 108. Further, inverse orthogonal transform processing is implemented at the inverse orthogonal transform unit 109 so that there is provided decoded image information. After removal of block distortion is implemented at the deblock filter 110, the information therefor is stored into the frame memory 111. At the intra predicting unit 112, information relating to intra prediction mode applied to corresponding block/macroblock is transmitted to the reversible encoding unit 106 so that the information thus transmitted is encoded as a portion of header information in the image compressed information DPC.

In connection with image subject to inter-encoding, image information is first inputted to a compensation prediction unit 113. At the same time, image information serving as reference is taken out from the frame memory 111. The image information thus obtained is caused to undergo compensation prediction processing. Thus, reference image information is generated. The reference image information thus generated is sent to the adder 103. At the adder 103, the reference image information thus sent is converted into a difference signal between the reference image information and corresponding image information. The image compensation prediction unit 113 outputs, at the same time, motion vector information to the reversible encoding unit 106. The motion vector information thus obtained is caused to undergo reversible encoding processing such as variable length encoding or arithmetic encoding to form information to be inserted into the header portion of the image compressed information DPC. Other processing are similar to those of image compressed information DPC.

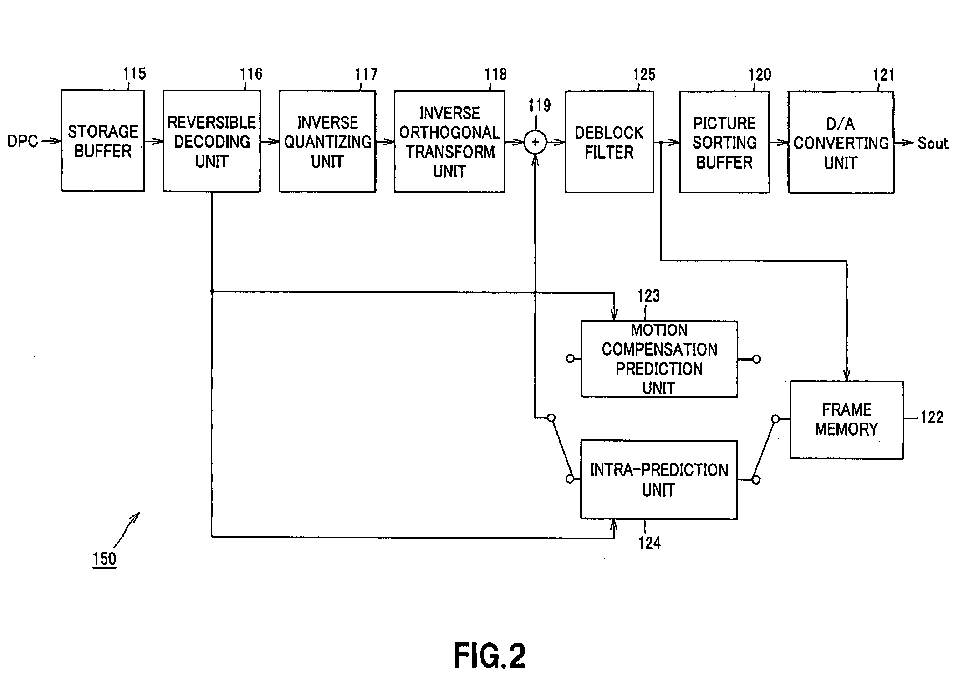

A block diagram of an example of the configuration of an image information decoding apparatus 150 adapted for realizing image decompression by inverse orthogonal transform such as Discrete Cosine Transform or Karhunen-Loeve transform, etc. and motion compensation is shown in FIG. 2.

The image information decoding apparatus 150 is composed of a storage buffer 115 supplied with image compressed information DPC, a reversible encoding unit 116 supplied with image compressed information DPC which has been read from the storage buffer 115, an inverse quantizing unit 117 supplied with an output of the reversible encoding unit 116, an inverse orthogonal transform unit 118 supplied with an output of the inverse-quantizing unit 117, an adder 119 supplied with an output of the inverse orthogonal transform unit 118, a picture sorting buffer 120 and a frame memory 122 which are supplied with an output of the adder 119 through a deblock filter 125, a D/A converting unit 121 supplied with an output of the picture sorting buffer 120, a motion compensation prediction unit 123 supplied with an output of the frame memory 122, and an intra predicting unit 124, etc.

In the image information decoding apparatus 150, image compressed information DPC serving as input is first stored into the storage buffer 115. Thereafter, the image compressed information DPC thus stored is transferred to the reversible decoding unit 116. Here, processing such as variable length decoding or arithmetic decoding, etc. is performed on the basis of the format of the determined image compressed information DPC. In the case where corresponding frame is intra-encoded frame, the reversible decoding unit 116 also decodes, at the time, intra predictive mode information stored at the header portion of the image compressed information DPC to transmit the information thus obtained to the intra predicting unit 124. In the case where corresponding frame is inter-encoded frame, the reversible decoding unit 116 also decodes motion vector information stored at the header portion of the image compressed information DPC to transfer the information thus obtained to the compensation prediction unit 123.

Quantized transform coefficients obtained as an output of the reversible decoding unit 116 are inputted to the inverse quantizing unit 117. The quantized transform coefficients thus obtained are outputted therefrom as transform coefficients. The transform coefficients are caused to undergo fourth order inverse orthogonal transform on the basis of a predetermined system at the inverse orthogonal transform unit 118. In the case where corresponding frame is intra-encoded frame, synthesis of image information to which the inverse orthogonal transform processing has been implemented and predictive image generated at the intra predicting unit 124 is performed at the adder 119. Further, after removal of block distortion is implemented at the deblock filter 125, the synthesized image thus obtained is stored into the picture sorting buffer 120, and is caused to undergo D/A converting processing by the D/A converting unit 121 so that there is provided an output signal Sout.

In the case where corresponding frame is inter-encoded frame, reference image is generated on the basis of motion vector information to which reversible decoding processing has been implemented and image information stored in the frame memory 122. The reference image and an output of the inverse orthogonal transform unit 118 are synthesized at the adder 120. Other processings are similar to those of intra-encoded frame.

Meanwhile, in the image information encoding apparatus shown in FIG. 1, for the purpose of realizing high compression efficiency, the motion compensation prediction unit 112 performs the important role. In the AVC encoding system, three systems described below are introduced to thereby realize higher compression efficiency as compared to the conventional image encoding system such as MPEG 2-4, etc. Namely, the first system is Multiple Reference Frame motion compensation, the second system is motion compensation (prediction) using variable block size, and the third system is motion compensation of 1/4 pixel accuracy using FIR filter.

First, the Multiple Reference Frame motion compensation prescribed by the AVC encoding system will be described.

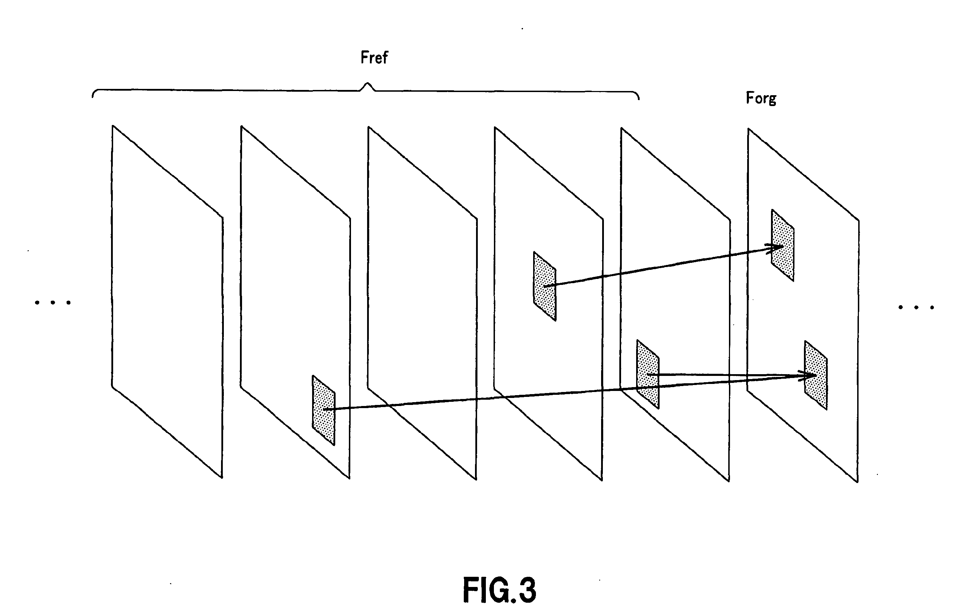

In the AVC, as shown in FIG. 3, reference images Fref of plural frames exist with respect to image Forg of a certain frame, thus to have ability to respectively designate reference images Fref of plural frames every respective motion compensation blocks.

Thus, e.g., in frame immediately therebefore, even in the case where block to be referred does not exist by occlusion, reference is performed in a retroactive manner, thereby making it possible to prevent lowering of encoding efficiency. Namely, also in the case where an area desired to be primarily searched by reference picture is not hidden by foreground, when an image corresponding thereto is hidden by different reference image, that image is referred so that motion compensation prediction can be performed.

Moreover, in the case where flash exists in an image serving as reference, frame corresponding thereto is referred so that encoding efficiency is remarkably lowered. Also in this case, reference is performed in a retroactive manner, thereby making it possible to prevent lowering of encoding efficiency.

Then, motion compensation using variable block size prescribed by the AVC encoding system will be described.

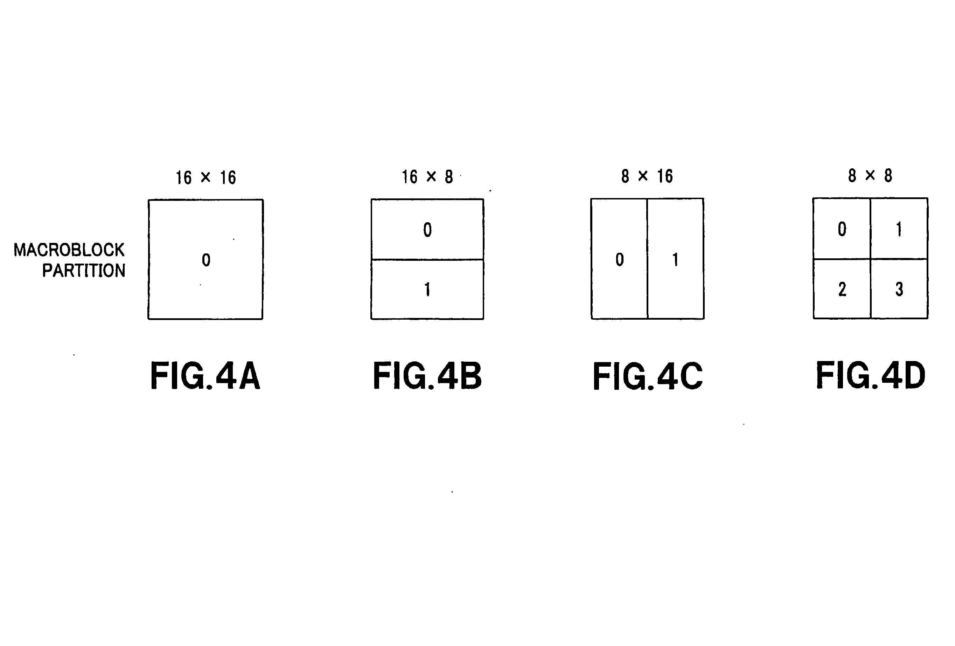

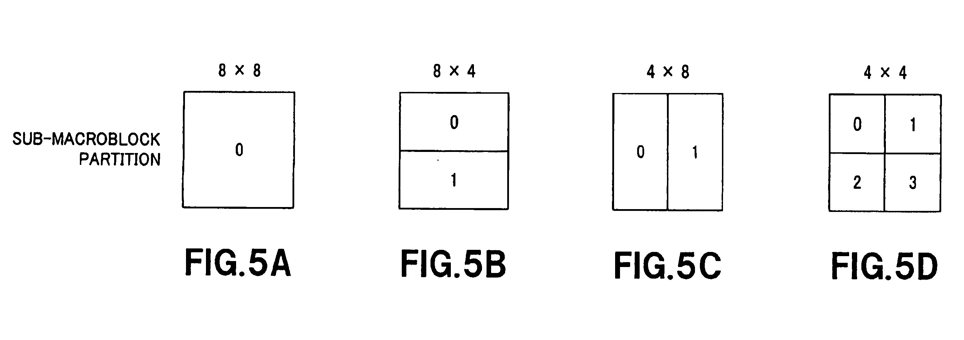

In the AVC encoding system, as macroblock partitions are shown in FIGS. 4A, 4B, 4C and 4D, one macroblock is divided into any one of motion compensation blocks of $16 \times 16$, $16 \times 8$, $8 \times 16$ or $8 \times 8$ to have ability to independently have motion vectors and reference frames at respective motion compensation blocks. Further, as sub-macroblock partitions are shown in FIGS. 5A, 5B 5C and 5D, in connection with $8 \times 8$ motion compensation block, it is possible to divide respective partitions into any one of sub-partitions of $8 \times 8$, $8 \times 4$, $4 \times 8$ and $4 \times 4$. In the respective macroblocks MB, respective motion compensation blocks can have individual motion vector information.

Then, the motion compensation processing of 1/4 pixel accuracy prescribed by the AVC encoding system will be described.

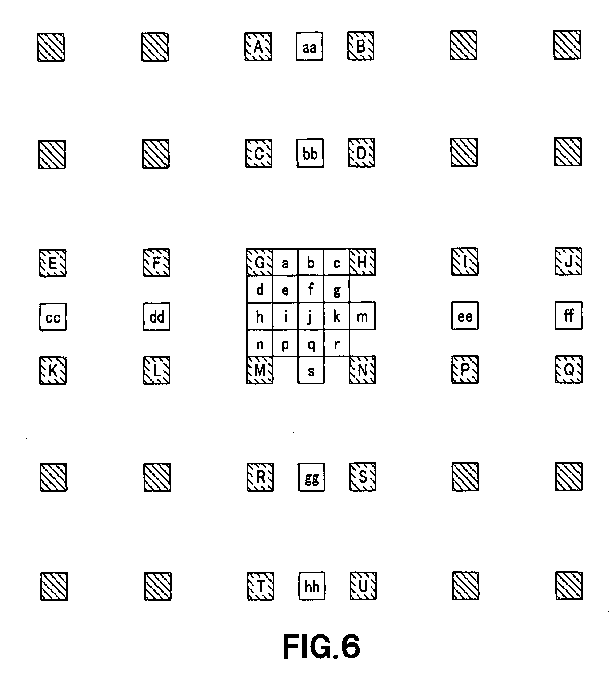

The motion compensation processing of 1/4 pixel accuracy will be explained below by using FIG. 6.

In the AVC encoding system, for the purpose of generating pixel value of 1/2 pixel accuracy, FIR (Finite Impulse Response) filter of six taps having filter coefficients as shown in the following formula (1) is defined.

$$\{1,\ -5,\ 20,\ 20,\ -5,\ 1\} \qquad \text{[Formula (1)]}$$

In connection with motion compensation (interpolation) with respect to pixel values b, h shown in FIG. 6, the filter coefficients of the formula (1) are used to first perform logical sum operation as shown in the following formula (2).

$$b = (E - 5F + 20G + 20H - 5H + J)$$

$$h = (A - 5C + 20G + 20M - 5R + T) \qquad \text{[Formula (2)]}$$

Thereafter, processing shown in the formula (2) is performed.

$$b = \text{Clip 1} ((b + 16) >> 5) \qquad \text{[Formula (3)]}$$

Here, Clip1 indicates clip processing between (0, 255). Moreover, >>5 indicates 5 bit shift, i.e., division of $2^5$.

Moreover, in connection with pixel value j, after pixel values aa, bb, cc, dd, ee, ff, gg, hh are generated by the same technique as b, h, logical sum operation is implemented as shown in the formula (4). Thus, pixel value j is calculated by clip processing as shown in the formula (5).

$$j = cc - 5dd + 20h + 20m - 5ee + ff \qquad \text{[Formula (4)]},$$

or

$$j = aa - 5bb + 20b + 20s - 5gg + hh$$

$$j = Clip1\ ((j + 512) >> 10) \qquad \text{[Formula (5)]}$$

In connection with pixel values a, c, d, f, i, k, g, those pixel values are determined by linear interpolation of pixel value of integral pixel accuracy and pixel value of 1/2 pixel accuracy as indicated by the following formula (6).

$$a = (G + b + 1) >> 1$$

$$c = (H + b + 1) >> 1$$

$$d = (G + h + 1) >> 1$$

$$n = (M + h + 1) >> 1$$

$$f = (b + j + 1) >> 1$$

$$i = (h + j + 1) >> 1 \qquad \text{[Formula (6)]}$$

$$k = (j + m + 1) >> 1$$

$$q = (j + s + 1) >> 1$$

Moreover, in connection with pixel values e, g, p, those pixel values are determined by linear interpolation using pixel value of 1/2 pixel accuracy.

$$e = (b + h + 1) >> 1$$

$$g = (b + m + 1) >> 1 \qquad \text{[Formula (7)]}$$

$$p = (h + s + 1) >> 1$$

Meanwhile, in the image information encoding apparatus 100 shown in FIG. 1, large operation quantity is required for search of motion vector. In order to construct an apparatus operative on the real time basis, it is a key point how to reduce operation quantity required for motion vector search while minimizing picture quality deterioration.

However, in the AVC encoding system, as previously described above, since multiple reference frame motion compensation, motion compensation (prediction) using variable block size and motion compensation of 1/4 pixel accuracy are permissible, when the number of candidate reference frames is increased, the Refinement processing in the motion compensation prediction would be heavy (takes much time). In the Refinement processing, after search is roughly made by hierarchical search, motion vector is searched in primary (original) scale at the periphery of vector obtained as the result of the hierarchical search.

Further, in the case where consideration is made in connection with the image encoding apparatus (hardware realization), since motion search processing is performed, every reference frame, with respect to all block sizes within macroblock, access to memory becomes frequent. For this reason, depending upon the case, the memory band is required to be broadened.

"A CODEC for HDTV" by Netravli et al. IEEE transactions on consumer electronics 38, pages 325 - 340, (1992) August, No 3, New York US discloses encoded video with motion estimation performed on a block by block basis. To reduce the complexity of the search for motion vectors giving the minimum prediction error a hierarchical motion estimation is used in which motion vectors are found for contracted frames and then in a second stage they are found for the full resolution frame by performing a search centered around the motion vectors found for the contracted frames.

"Fast Mode Decision and Motion Estimation for JVY/H.264" by Yin et al. Proceedings 2003 International Conference on Image Processing, Sept 2003, pages 853 - 856 discloses a video coding standard in which multiple reference frames are used in motion estimation. Various techniques are used to reduce computational requirements for the encoding.

Disclosure of the Invention

Problem to be solved by the invention

In view of conventional problems as described above, an object of the present invention is to provide an image information encoding apparatus adapted for outputting image compressed information based on image encoding system such as AVC, etc., wherein high speed of motion vector search and reduction in memory access are realized.

Various respective aspects of the present invention are set out in the appended claims.

Still further objects of the present invention and practical merits obtained by the present invention will become more apparent from the explanation of the embodiments which will be given below.

Brief Description of the Drawings

FIG. 1 is a block diagram showing the configuration of an image information encoding apparatus for realizing image compression by orthogonal transform such as Discrete Cosine Transform or Karhunen-Loeve Transform, etc. and motion compensation.

FIG. 2 is a block diagram showing the configuration of an image information decoding apparatus adapted for realizing image decompression by inverse orthogonal transform such as Discrete Cosine Transform or Karhunen-Loeve Transform, etc. and motion compensation

FIG. 3 is a view showing the concept of the multiple reference frame motion compensation prescribed by the AVC encoding system.

FIGS. 4A, 4B, 4C and 4D are views showing macroblock partition in motion compensation processing based on the variable block size prescribed by the AVC encoding system.

FIGS. 5A, 5B, 5C and 5D are views showing sub-macroblock partition in the motion compensation processing based on the variable block size prescribed by the AVC encoding system.

FIG. 6 is a view for explaining motion compensation processing of 1/4 pixel accuracy prescribed by the AVC encoding system.

FIG. 7 is a block diagram showing the configuration of an image information encoding apparatus to which the present invention is applied.

FIG. 8 is a view showing operation principle of a thinning unit in the image information encoding apparatus.

FIG. 9 is a view for explaining checked sampling in the motion compensation prediction unit ($1/N^2$ resolution).

FIG. 10 is a view showing an example of the relationship between contracted image and reference image in the image information encoding apparatus.

FIGS. 11A and 11B are views showing examples of partitioning way of plural MB zones in the image information encoding apparatus.

FIG. 12 is a flowchart showing the procedure of image processing in the image information encoding apparatus.

FIG. 13 is a view showing the state of reduction of memory access.

Best Mode for Carrying Out the Invention

Preferred embodiments of the present invention will now be explained in detail with reference to the attached drawings. It should be noted that the present invention is not limited to the following examples, but it is a matter of course that the present invention may be arbitrarily changed or modified within the gist which does not depart from the gist of the present invention.

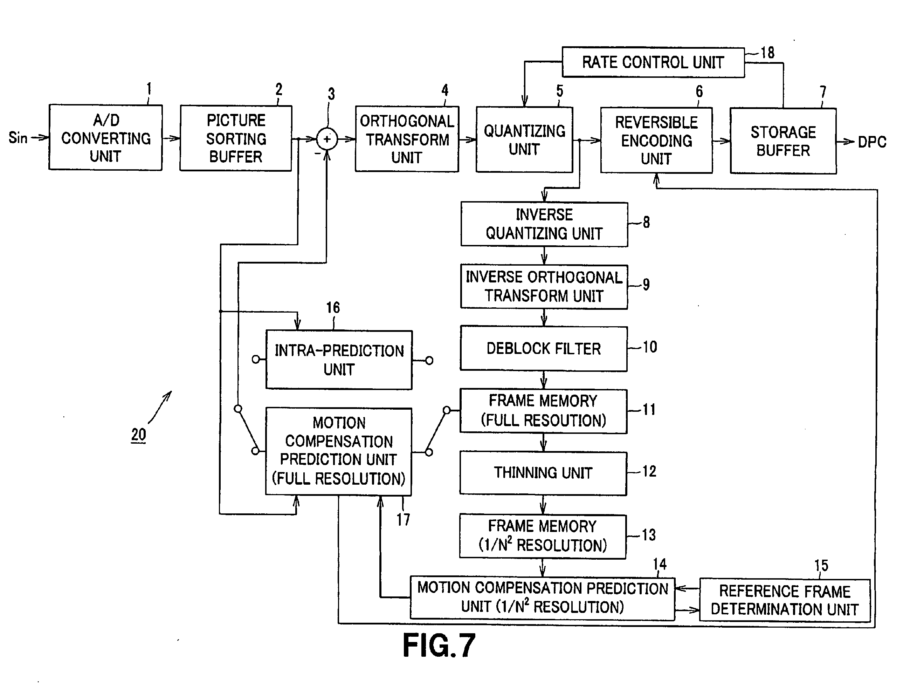

The present invention is applied to, e.g., an image information encoding apparatus 20 of the configuration as shown in FIG. 7.

Namely, the image information encoding apparatus 20 shown in FIG. 7 comprises an A/D converting unit 1 supplied with an image signal Sin serving as input, a picture sorting buffer 2 supplied with image data digitized by the A/D converting unit 1, an adder 3 supplied with image data which has been read out from the picture sorting buffer 2, an intra-predicting unit 16, a motion compensation prediction unit 17, an orthogonal transform unit 4 supplied with an output of the adder 3, an quantizing unit 5 supplied with an output of the orthogonal transform unit 4, a reversible encoding unit 6 and an inverse quantizing unit 8 which are supplied with an output of the quantizing unit 5, a storage buffer 7 supplied with an output of the reversible encoding unit 6, a rate control unit 18 supplied with an output of the storage buffer 7, an inverse orthogonal transform unit 9 supplied with an output of the inverse quantizing unit 8, a deblock filter 10 supplied with an output of the inverse orthogonal transform unit 9, a frame memory (full resolution) 11 supplied with an output of the deblock filter 10, a thinning unit 12 supplied with an output of the frame memory (full resolution) 11, a frame memory ($1/N^2$ resolution) 13 supplied with an output of the thinning unit 12, a motion compensation prediction unit (full resolution) 14 supplied with an output of the frame memory ($1/N^2$ resolution) 13, and a reference frame determination unit 15 connected to the motion compensation prediction unit (full resolution) 14, etc.

In the image information encoding apparatus 20, an image signal Sin serving as an input is first converted into a digital signal at the A/D converting unit 101. Then, sorting of frames is performed at the picture sorting buffer 2 in accordance with GOP (Group of Pictures) structure of an image compressed information DPC serving as an output. In connection with image subject to intra-encoding, difference information between an input image and a pixel value generated by the intra predicting unit 16 is inputted to the orthogonal transform unit 4, at which orthogonal transform such as Discrete Cosine Transform or Karhunen-Loeve transform, etc. is implemented thereto.

Transform coefficients obtained as an output of the orthogonal transform unit 4 are caused to undergo quantization processing at the quantizing unit 5. Quantized transform coefficients obtained as an output of the quantizing unit 5 are inputted to the reversible transform unit 6, at which reversible encoding such as variable length encoding or arithmetic encoding, etc. is implemented thereto. Thereafter, the encoded transform coefficients thus obtained are stored into the storage buffer 7, and are outputted as image compressed information DPC. At the same time, the quantized transform coefficients obtained as an output of the quantizing unit 5 are inputted to the inverse quantizing unit 8. Further, those quantized transform coefficients are caused to undergo inverse orthogonal transform processing at the inverse orthogonal transform unit 9 so that there is provided decoded image information. After removal of block distortion is implemented at the deblock filter 10, information thus obtained is stored into the frame memory 11. Information relating to the intra predictive mode which has been applied to corresponding block/macroblock at the intra predicting unit 16 is transmitted to the reversible encoding unit 6, at which that information is encoded as a portion of header information in the image compressed information DPC.

In connection with image subject to inter-encoding, image information is first inputted to the motion compensation prediction unit 17. At the same time, image information serving as reference is taken out from the frame memory 11, at which motion compensation prediction processing is implemented. Thus, reference image information is generated. The reference image information is sent to the adder 3, at which the reference image information thus sent is converted into a difference signal between the reference image information and corresponding image information. The motion compensation prediction unit 17 outputs, at the same time, motion vector information to the reversible encoding unit 6. The motion vector information thus obtained is caused to undergo reversible encoding processing such as variable length encoding or arithmetic encoding to form information to be inserted into the header portion of image compressed information DPC. Other processing are similar to those of image compression information DPC to which intra-encoding is implemented.

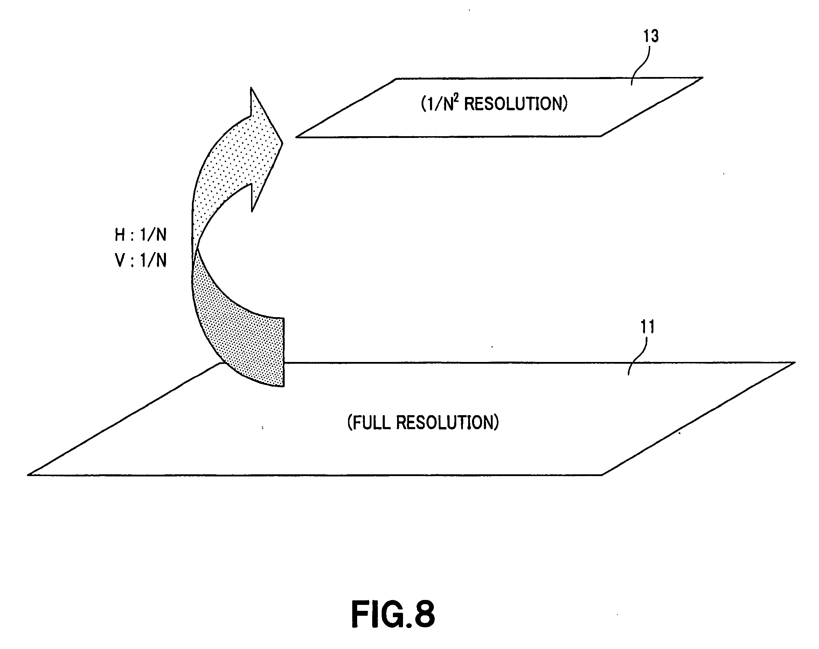

Further, in the image information encoding apparatus 20, as shown in FIG. 8, the thinning unit 12 is supplied with image information stored in the frame memory (full resolution) 11 to perform 1/N thinning processing respectively with respect to horizontal direction and vertical direction to store pixel value thus generated into the frame memory ($1/N^2$ resolution) 13.

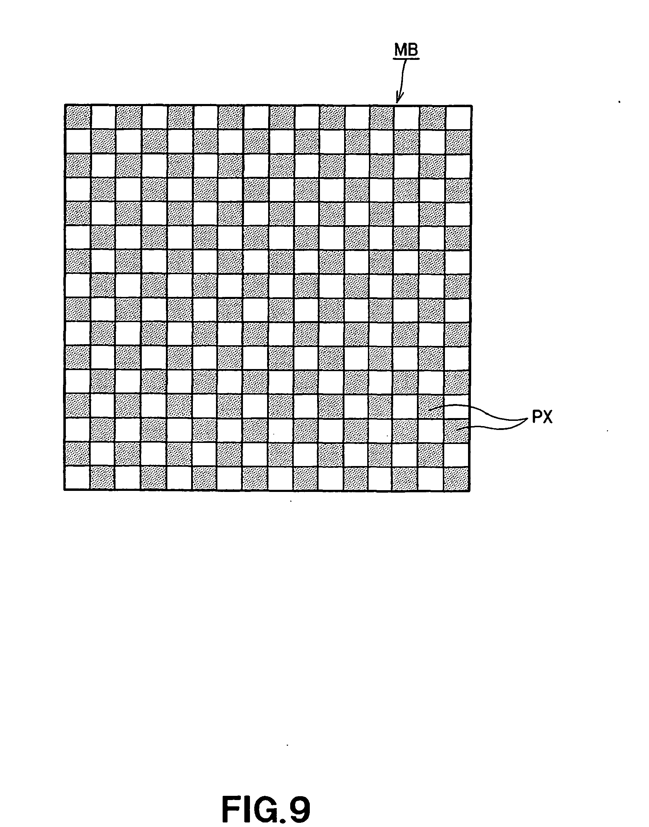

Moreover, the motion compensation prediction unit ($1/N^2$ resolution) 14 performs search of motion vector information optimum for corresponding block in accordance with the block matching by using pixel value stored in the frame memory ($1/N^2$ resolution) 13, or by using pixel value of $16 \times 16$ blocks. In this instance, in place of calculating predictive energy by using all pixel values, calculation is performed, as shown in FIG. 9, by using pixel value of pixel PX designated in checked form with respect to macroblock MB as shown in FIG. 9.

In field-encoding corresponding picture, thinning processing shown in FIF. 8 is performed in the state divided into the first field and the second field.

In a manner as stated above, motion vector information which has been searched by using contracted image is inputted to the motion compensation prediction unit (full resolution) 17. When, e.g., N is equal to 2, in the case where unit of search is $8 \times 8$ blocks at the motion compensation prediction unit (1/4 resolution) 14, one $16 \times 16$ block is determined with respect to one macroblock MB, and in the case where unit of search is $16 \times 16$ block, one $16 \times 16$ block is determined with respect to four macroblocks MB. However, the motion compensation prediction unit (full resolution) 17 performs search of all motion vector information defined in FIGS. 4 and 5 within the very small or narrow range with these $16 \times 16$ motion vectors being as center. In a manner as stated above, motion compensation prediction is performed with respect to very small or narrow search range on the basis of motion vector information determined on the contracted image, thus making it possible to reduce operation quantity to much degree while minimizing picture quality deterioration.

The determination of reference frame with respect to respective motion compensation blocks will be performed as below.

Namely, the motion compensation prediction unit ($1/N^2$ resolution) 14 performs detection of motion vector with respect to all reference frames serving as candidate. The motion compensation prediction unit (full resolution) 17 performs Refinement processing of motion vectors determined with respect to respective reference frames and thereafter selects, as reference frame with respect to corresponding motion compensation block, such a reference frame to minimize residual or any cost function. In the Refinement processing, after search is roughly made by hierarchical search, motion vector is searched in primary (original) scale at the periphery of motion vector obtained as the result of the hierarchical search.

Meanwhile, in the AVC, as previously described, since the multiple reference frame motion compensation, motion compensation (prediction) using variable block size and motion compensation of 1/4 pixel accuracy are permitted, when the number of candidate reference frames is increased, the Refinement processing at the motion compensation prediction unit (full resolution) 17 becomes heavy (takes much time).

Further, in the case where consideration is made in connection with the image encoding apparatus (hardware realization), since motion search processing is performed every reference frame with respect to all block sizes within the macroblock MB, access to memory becomes frequent. For this reason, the memory band is required to be broadened.

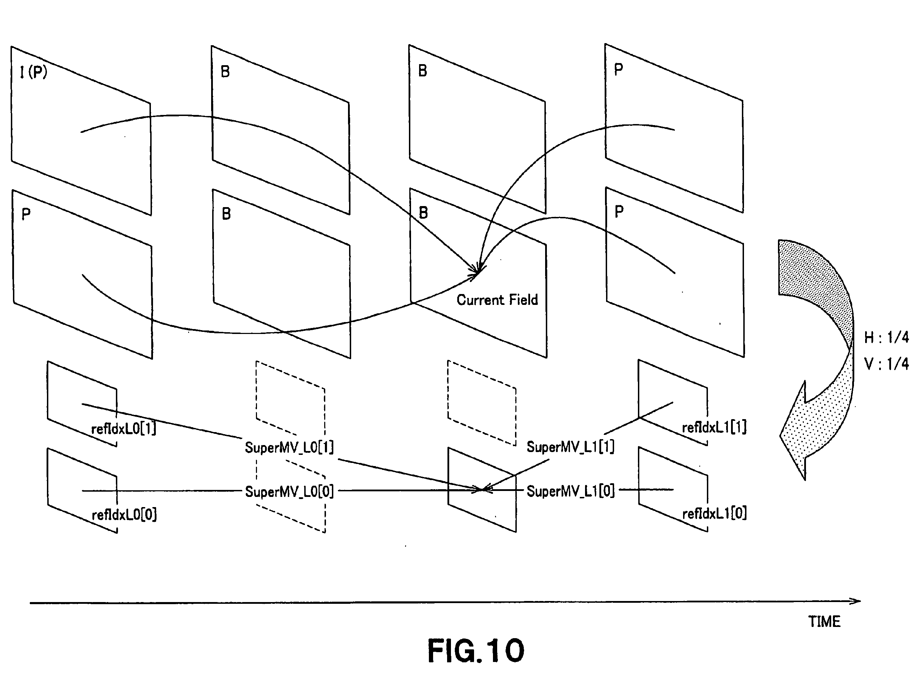

Here, a practical example in the case of field coding is shown in FIG. 10. This example is the example where corresponding field is bottom field of B picture, the forward side (List0) and the backward side (List1) of the reference field are both two fields, and contraction factor N of the frame memory ($1/N^2$ resolution) is four (4). List0, List1 are lists for index of reference image. In the P picture to refer the forward side, index list called List0 is used so that designation of reference image is performed. In the B picture to refer backward side, index list called List 1 is used so that designation of reference image is performed.

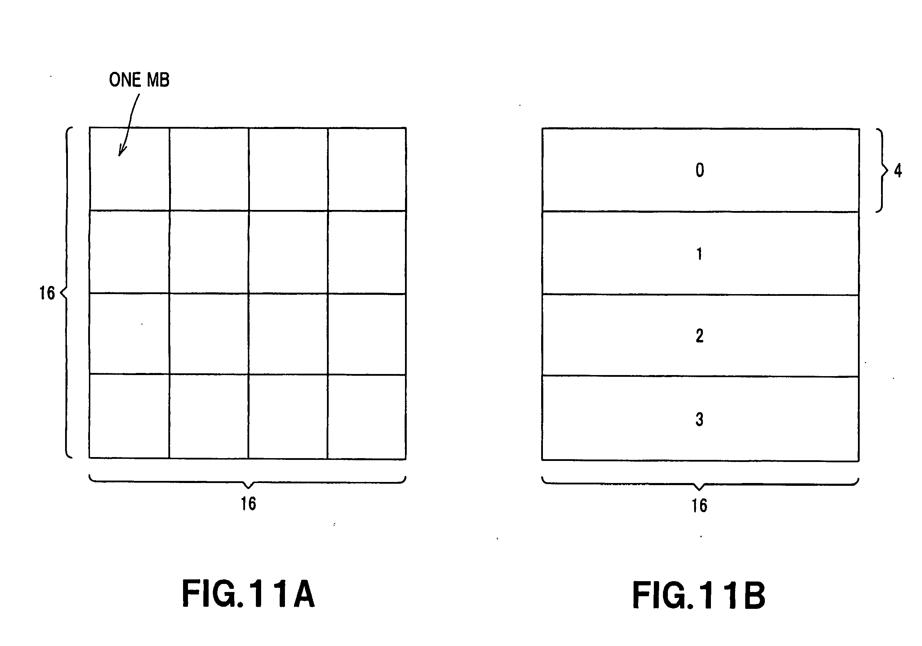

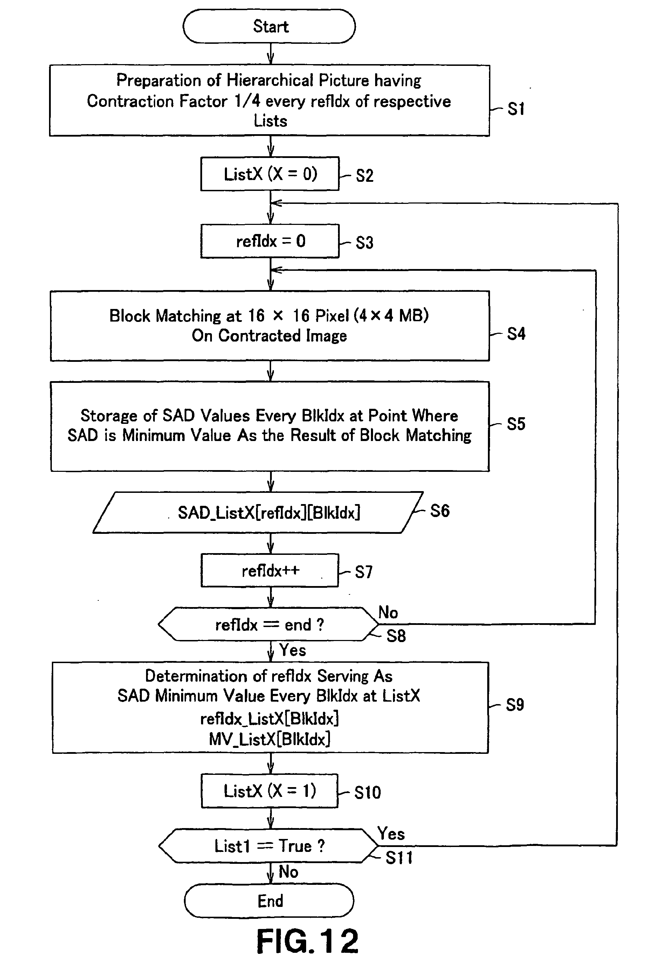

In the case where optimum motion vectors are derived at the motion compensation prediction unit ($1/N^2$ resolution) 14 by block matching every reference field and, at the motion compensation prediction unit (full resolution) 17, Refinement processing is performed with respect to all block sizes with the motion vector being as center, to determine reference field every List, Refinement processing at the motion compensation prediction unit (full resolution) 17 becomes heavy (takes much time). Accordingly, in the image information encoding apparatus 20, reference field is determined, as shown in FIGS. 11 and 12, at the reference frame determining unit 15.

At contraction factor (1/4) shown in FIG. 10, in the case where unit of block matching at the motion compensation prediction unit (1/16 resolution) 17 is caused to be $16 \times 16$ as shown in FIG. 11(A), motion vectors with respect to $4 \times 4$ macroblock (corresponding to sixteen) are set to the same value at the motion compensation prediction apparatus (full resolution) 17.

In the image information encoding apparatus 20, as shown in FIG. 11 (B), $16 \times 16$ block is divided into zone

8

of 16 × 4 to maintain energy (SAD) every zone of 16 x 4 in 16 x 16 block matching at the motion compensation prediction unit (1/16 resolution) 14.

Namely, when index numbers (BlKIdx) are numbered as 0, 1, 2, 3 from the upper portion of the zone, energy (SAD) as represented by the following formula (8) can be obtained every reference field.

With respect to ListX (X = 0, 1)

$$SAD\_ListX[refIdx][BlKIdx] \qquad [Formula\ (8)]$$

$$(BlKIdx = 0 \sim 3)$$

More specifically, SAD_ListX[refIdx][BlkIdk] represents formulation of energy state where SADa are stored every BlkIdx with respect to optimum motion vector which has been determined by 16 × 16 block matching every reference image index number refIdx of ListX. The reference image index number refIdx is index indicating reference image which can be arbitrarily defined from the standard, wherein small numbers are assigned from nearer reference image in ordinary state. Even with respect to the same reference image, different reference image index numbers are respectively attached to List0 indicating reference image of the forward side, and List1 indicating reference image of the backward side.

Further, in respective reference fields, by 16 × 16 block matching, there are obtained optimum motion vectors MV_ListX[refIdx] (MV_List0[0], MV_List0[1], MV_List1[0] and MV_List1[1]).

Here, in this related technique as indicated by the following formula (9), the reference frame determination unit 15 performs comparison between residual energies every corresponding index numbers BlkIdx of respective Lists to determine the reference field where energy is small as reference field of 16 × 4 unit.

With respect to ListX (X = 0,1)

$$refIdx[BlkIdx]$$

$$= MIN\ (SAD\_ListX[refIdx][BlkIdx])$$

$$(BlkIdx = 0 \sim 3)$$

$$[Formula\ (9)]$$

Moreover, switching of motion vector MV_ListX[refIdx] is also performed every determined reference image index number refIdx.

In a related technique the case where energies are the same value, field having small reference image index number refIdx is caused to be reference field.

By the above-mentioned processing, there are obtained, every BlkIdx, reference field (refIdx_ListX[BlkIdx]) and motion vector (MV_ListX[BlkIdx])

Here, while index value used for comparison is caused to be difference absolute value sum (SAD: Sum of Absolute Difference) obtained as the result of block matching of M × N, there may be used orthogonally transformed difference absolute value sum (SATD: Sum of Absolute Transformed Difference) or difference square sum (SSD: Sum of Square Difference) obtained as the result of block matching of M × N.

Further, in place of allowing only SAD, SATD or SSD determined from residual energy to be index value, value obtained by adding value of reference image index refIdx number to SAD, etc. with an arbitrary weighting (λ1) may be also evaluation index value.

When evaluation index is defined by name of Cost, the evaluation index is represented by the formula (10).

$$Cost = SAD + \lambda_1 \times refIdx \qquad [Formula\ (10)]$$

Further, information quantity of motion vector may be added to the evaluation index.

In concrete terms, evaluation index generation formula is defined by using weighting variable λ2 as indicated by the formula (11).

$$\text{Cost} = \text{SAD} + \lambda_1 \times \text{refIdx} + \lambda_2 \times \text{MV} \qquad [\text{Formula (11)}]$$

Namely, the image information encoding apparatus 20 performs image processing in accordance with the procedure shown in the flowchart of FIG. 12.

Namely, 1/N thinning processing is implemented to inputted image information stored in the frame memory (full resolution) 136 with respect to respective horizontal and vertical directions by the thinning unit 137 to store pixel value thus generated into the frame memory ($1/N^2$ resolution) 139 (step S1).

Setting is made such that ListX (X = 0) (step S2)

Setting is made such that refIdx = 0 (step S3).

By the motion compensation prediction unit ($1/N^2$ resolution) 138, pixel value stored in the frame memory ($1/N^2$ resolution) 139 is used to perform, by block matching, search of optimum motion vector information with respect to corresponding block (step S4).

Further, SAD value is stored every BlkIdx at a point where SAD obtained as the result of block matching becomes equal to minimum value (step S5).

Then, there is determined SAD_ListX[refIdx][BlkIdx] indicating formulation of energy state in which SADs are stored every BlkIdx with respect to optimum motion vector determined by 16 × 16 block matching every reference image index number refIdx of ListX (step S6).

The reference image index number refIdx is incremented (step S7).

Whether or not reference image index number refIdx becomes equal to last value is judged (step S8). In the case where its judgment result is NO, processing returns to the step S4 to repeatedly perform processing of steps S4 ~ S8.

When the judgment result at the step S8 is YES, reference image index number refIdx in which SAD becomes equal to the minimum value is determined every BlkIdx at ListX (step S9).

Setting is made such that ListX (X = 1) (step S10).

Further, whether ListX is List1 or not is judged (step S11). In the case where that judgment result is YES, processing returns to the step S3 to repeatedly perform processing of steps S3 ~ S11. Moreover, in the case where judgment result at the step S1 is NO, the processing is completed.

Refinement processing is performed only with respect to the periphery of reference image index number refIdx and motion vector which have been determined every List or every BlkIdx obtained in a manner as stated above to reduce operation quantity of refinement processing thus to have ability to realize high speed of motion vector search.

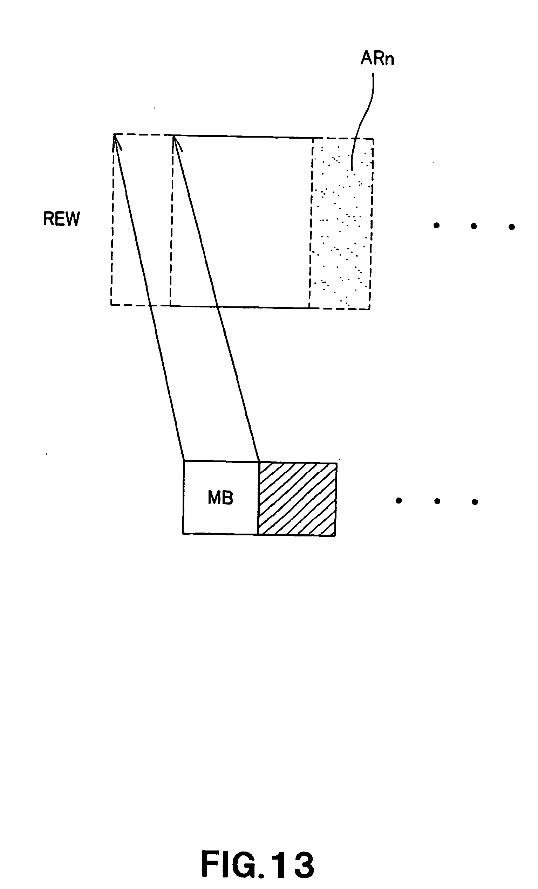

Moreover, since reference image index number refIdx and motion vector are prepared in the zone of 4 × 1MB at the above-mentioned processing, memory which has been searched before corresponding macroblock MB is reutilized in memory-accessing the area for searching motion vector in the refinement processing to access only the area ARn newly required within the refinement window REW as shown in FIG. 13 to also permit reduction of memory access.

While explanation has been given by taking field as an example, this similarly applies to the frame.

Further, while an example of the block of 4 × 1MB is taken, in the case where macroblock MB of M × N is used as unit of block matching at contracted image, the present invention can be applied to the case where unit of M × N' (N' is 1 or more, and is N or less), or M' × N (M' is 1 or more, or is M or less) is caused to be BlkIdx.

**Claims**

1. A motion compensation prediction method of performing a search for motion vectors based on hierarchical search for each respective motion compensation block, said motion compensation block being a block in one of a plurality of frames, said frames relating to a plurality of images that are encoded into the form of said plurality of frames, the block being related to a corresponding block in one of a plurality of reference frames by a motion vector, by designating for each of said motion compensation blocks one of said plurality reference frames to be used as a reference frame for said motion compensation block the motion compensation prediction method comprising:

   a hierarchical structure realization step of generating a contracted frame having a predetermined contraction factor by thinning pixels of the original frame;
   a first motion compensation prediction step of searching motion vector by using the contracted frame generated at the hierarchical structure realization step and multiple candidate contracted reference frames contracted at the hierarchical structure realization step;
a reference frame determination step for selecting a contracted reference frame from said multiple candidate contracted reference frames for respective motion compensation blocks from the first motion compensation step by determining a reference frame that provides a minimised cost between corresponding respective motion compensation blocks in said frame and said contracted reference frame, said cost being equal to one of sum of absolute difference (SAD), orthogonally transformed difference absolute value sum (SATD), or difference square sum (SSD) obtained as a result of block matching of the contracted frame and the contracted reference frame added to a value of reference frame index number (refIdx) with an arbitrary weighting; and
a second motion compensation prediction step of searching, with respect to a frame before contraction, motion vector by searching at the periphery of a motion vector which has been obtained at the first motion prediction step for each respective motion compensation block with respect to said respective selected reference frame and performing motion compensation prediction.

2. The motion compensation prediction method according to claim 1, wherein, at the first motion compensation prediction step, a macroblock of M X N pixels is divided into reduced size blocks of M' X N' pixels (M' being 1 or more and M or less, N' being 1 or more and N or less) and the difference absolute value sum (SAD) that form evaluation index values obtained as the result of block matching of the M' X N' blocks of the contracted frame and contracted reference frame.

3. The motion compensation prediction method according to claim 1, wherein, at the first motion compensation prediction step, a macroblock of M X N, is divided into blocks of M' X N' (M' being 1 or more and M or less, N' being 1 or more and N or less) and orthogonally transformed difference absolute value sum (SATD) that form evaluation index values obtained as the result of block matching of the M' X N' blocks of the contracted frame and contracted reference frame.

4. The motion compensation prediction method according to claim 1, wherein, at the first motion compensation prediction step, a macroblock of M X N, is divided into reduced sized blocks of M'X N' (M' being 1 or more and M or less, N' being 1 or more and N or less) and a difference square sum (SSD) that form evaluation index values obtained as the result of block matching of the M' X N' blocks of the contracted frame and contracted reference frame.

5. The motion compensation prediction method according to claim 1, wherein, in the reference frame determination step, in the case of B picture, evaluation index calculation of bidirectional prediction is performed, on the basis of reference frame index numbers (refIdx) determined at respective Lists, to perform judgment of forward prediction, backward prediction and bidirectional prediction.

6. A motion compensation prediction apparatus adapted for performing search for motion vector based on hierarchical search for each respective motion compensation block being a block in one of a plurality of frames, said frames relating to a plurality of images that are encoded into the form of said plurality of frames and relating to a corresponding block in one of a plurality of reference frames for said plurality of frames by a motion vector, by designating for each of said motion compensation blocks any one of said plurality of reference frames to be used as a reference frame for said motion compensation block, the motion compensation prediction apparatus comprising:

hierarchical structure realization means (12) for generating contracted frames having a predetermined contraction factor by thinning pixels of the original frames;
first motion compensation prediction means (14) for searching motion vector by using contracted frame generated by the hierarchical structure realization means and multiple candidate reference frames contracted by the hierarchical structure realization means;
reference frame determination means (15) for selecting a contracted reference frame for respective motion compensation blocks by the first motion compensation prediction means by determining a reference frame that provides a minimised cost between corresponding blocks in said frame and said contracted reference frame, said cost being equal to one of sum of absolute difference (SAD), orthogonally transformed difference absolute value sum (SATD), or difference square sum (SSD) obtained as a result of block matching of the contracted frame and the contracted reference frame added to a value of reference frame index number (refidx) with an arbitrary weighting; and
second motion compensation prediction means (17) for searching, with respect to an frame before contraction and said selected reference frame before contraction, motion vector by searching at the periphery of a motion vector which has been obtained by the first motion compensation prediction means and performing motion compensation prediction.

**7.** The motion compensation prediction apparatus according to claim 6, wherein the first motion compensation prediction means is adapted so that M X N pixels, is divided into reduced sized blocks of M'X N' pixels (M' being 1 or more and M or less, N' being 1 or more and N or less) and difference absolute value sum (SAD) that form evaluation index values obtained as the result of block matching of the M' X N' blocks of the contracted frame and contracted reference frame.

**8.** The motion compensation prediction apparatus according to claim 6, wherein the first motion compensation prediction means is adapted so that M X N, which is unit of hierarchical search, is divided into reduced sized blocks blocks of M'X N' (M' being 1 or more and M or less, N' being 1 or more and N or less) and orthogonally transformed difference absolute value sum (SATD) that form evaluation index values obtained as the result of block matching the M' X N' blocks of the contracted frame and contracted reference frame.

**9.** The motion compensation prediction apparatus according to claim 6, wherein the first motion compensation prediction means is adapted so that macroblock of M X N, which is unit of hierarchical search, is divided into reduced sized blocks of M'X N' (M' being 1 or more and M or less, N' being 1 or more and N or less) and difference square sum (SSD) that form evaluation index values obtained as the result of block matching the M' X N' blocks of the contracted frame and contracted reference frame.

**10.** The motion compensation prediction apparatus according to claim 6, wherein the reference frame determination means is operative so that, in the case of B picture, it performs evaluation index calculation of bidirectional prediction on the basis of reference frame index numbers (refldx) determined at respective Lists to perform judgment of forward prediction, backward prediction and bidirectional prediction.

**Patentansprüche**

**1.** Verfahren zum Vorhersagen einer Bewegungskompensation für das Durchführen einer Suche nach Bewegungsvektoren basierend auf einer hierarchischen Suche für jeden betreffenden Bewegungskompensationsblock, wobei der Bewegungskompensationsblock ein Block in einem einer Vielzahl von Frames ist, wobei sich die Frames auf eine Vielzahl von Bildern beziehen, die in Form der Vielzahl von Frames kodiert sind, wobei der Block mit einem entsprechenden Block in einem einer Vielzahl der Referenz-Frames über einen Bewegungsvektor in Beziehung steht, indem für jeden der Bewegungskompensationsblocks einer der Vielzahl der Referenz-Frames gekennzeichnet wird, der als Referenz-Frame für den Bewegungskompensationsblock verwendet werden soll, wobei das Bewegungskompensationsverfahren aufweist:

einen Schritt zur Verwirklichung der hierarchischen Struktur für das Generieren kontrahierter Frames mit einem bestimmten Kontraktionsfaktor durch Ausdünnen der Pixel des ursprünglichen Frames;
einen ersten Schritt zur Vorhersage der Bewegungskompensation für das Suchen des Bewegungsvektors unter Verwendung des kontrahierten Frames, der im Schritt der Verwirklichung der hierarchischen Struktur generiert wurde, und mehreren kontrahierten Kandidatenreferenz-Frames, die im Schritt der Verwirklichung der hierarchischen Struktur kontrahiert wurden;
ein Schritt zum Bestimmen eines Referenz-Frames für das Auswählen eines kontrahierten Referenz-Frames aus mehreren kontrahierten Kandidatenreferenz-Frames für entsprechende Bewegungskompensationsblöcke aus dem ersten Bewegungskompensationsschritt, indem ein Referenz-Frame bestimmt wird, der minimierte Kosten zwischen den entsprechenden Bewegungskompensationsblöcken in dem Frame und den kontrahierten Referenz-Frames vorsieht, wobei die Kosten einer von der Summe der absoluten Differenzen (SAD), der Summe der orthogonal transformierten absoluten Differenzen (SATD) oder der Summe der quadrierten Differenzen (SSD), die als Ergebnis eines Blockvergleichs des kontrahierten Frames und des kontrahierten Referenz-Frames erhalten wurde, addiert zu einem Wert der Referenzframe-Indexnummer (refldx) mit einer frei wählbaren Gewichtung entsprechen; und
einem zweiten Schritt zum Vorhersagen der Bewegungskompensation für das Suchen eines Bewegungsvektors bezüglich eines Frames vor der Kontraktion, indem an der Peripherie eines Bewegungsvektors gesucht wird, der im ersten Schritt zum Vorhersagen der Bewegung für jeden entsprechenden Bewegungskompensationsblock bezüglich des entsprechenden ausgewählten Referenz-Frames erhalten wurde, und
Durchführen der Vorhersage der Bewegungskompensation.

**2.** Verfahren zum Vorhersagen der Bewegungskompensation gemäß Anspruch 1, wobei im ersten Schritt zum Vorhersagen der Bewegungskompensation ein Makroblock von M x N-Pixel in kleinere Blöcke von M' x N'-Pixel (M' ist größer oder gleich 1 und M oder kleiner, N' ist größer gleich 1 und N oder kleiner) unterteilt wird und die Summe der absoluten Differenzen (SAD), die die Evaluierungsindexwerte bilden, als Ergebnis des Blockvergleichs der M' x N'-Blöcke des kontrahierten Frames und des kontrahierten Referenz-Frames erhalten wird.

3. Verfahren zum Vorhersagen der Bewegungskompensation gemäß Anspruch 1, wobei im ersten Schritt der Vorhersage der Bewegungskompensation, ein Makroblock von M x N in die Blöcke M' x N' (M' ist größer oder gleich 1 und M oder kleiner ist, N' ist größer gleich 1 und N oder kleiner) unterteilt wird und die Summe der orthogonal transformierten absoluten Differenzen (SATD), die die Evaluierungsindexwerte bilden, als Ergebnis des Blockvergleichs der M' x N'-Blöcke des kontrahierten Frames und des kontrahierten Referenz-Frames erhalten wird.

4. Verfahren zum Vorhersagen der Bewegungskompensation gemäß Anspruch 1, wobei im ersten Schritt zum Vorhersagen der Bewegungskompensation ein Makroblock von M x N in kleinere Blöcke M' x N' (M' ist größer oder gleich 1 und M oder kleiner, N' ist größer gleich 1 und N oder kleiner) unterteilt wird und die Summe der quadrierten Differenzen (SSD), die die Evaluierungsindexwerte bilden, als Ergebnis des Blockvergleichs der M' x N'-Blöcke des kontrahierten Frames und des kontrahierten Referenz-Frames erhalten wird.

5. Verfahren zum Vorhersagen der Bewegungskompensation gemäß Anspruch 1, wobei im Schritt zum Bestimmen des Referenz-Frames im Falle des Bildes B die Berechnung des Evaluierungsindex der bidirektionalen Vorhersage auf der Basis der Referenz-Frame-Indexnummer (refIdx) durchgeführt wird, die anhand entsprechender Listen bestimmt werden, um eine Beurteilung der vorwärts gerichteten Vorhersage, der rückwärts gerichteten Vorhersage und der bidirektionalen Vorhersage durchzuführen.

6. Vorrichtung zum Vorhersagen einer Bewegungskompensation, die angepasst ist zum Durchführen einer Suche nach einem Bewegungsvektor basierend auf einer hierarchischen Suche für jeden betreffenden Bewegungskompensationsblock, der ein Block in einer Vielzahl von Frames ist, wobei sich die Frames auf eine Vielzahl von Bildern beziehen, die in Form der Vielzahl von Frames kodiert sind und mit einem entsprechenden Block in einem der Vielzahl der Referenz-Frames für die Vielzahl der Frames über einen Bewegungsvektor in Beziehung stehen, indem für jeden der Bewegungskompensationsblocks einer der Vielzahl der Referenz-Frames gekennzeichnet wird, der als Referenz-Frame für den Bewegungskompensationsblock verwendet werden soll, wobei die Bewegungskompensationsvorrichtung aufweist:

Mittel (12) zur Verwirklichung der hierarchischen Struktur zum Generieren kontrahierter Frames mit einem bestimmten Kontraktionsfaktor durch Ausdünnen der Pixel des ursprünglichen Frames;
erste Mittel (14) zur Vorhersage der Bewegungskompensation zum Suchen des Bewegungsvektors mittels des kontrahierten Frames, der vom Mittel zum Verwirklichen der hierarchischen Struktur generiert wurde, und mehreren Kandidatenreferenz-Frames, die vom Mittel zum Verwirklichen der hierarchischen Struktur kontrahiert wurden;
Mittel (15) zum Bestimmen eines Referenz-Frames zum Auswählen eines kontrahierten Referenz-Frames für entsprechende Bewegungskompensationsblöcke durch das erste Mittel zum Vorhersagen der Bewegungskompensation durch Bestimmen eines Referenz-Frames, der minimierte Kosten zwischen den entsprechenden Bewegungskompensationsblöcken in dem Frame und dem kontrahierten Referenz-Frame vorsieht, wobei die Kosten einer von der Summe der absoluten Differenzen (SAD), der Summe der orthogonal transformierten absoluten Differenzen (SATD) oder der Summe der quadrierten Differenzen (SSD) entsprechen, die als Ergebnis eines Blockvergleichs des kontrahierten Frames und des kontrahierten Referenz-Frames erhalten wurde, addiert zu einem Wert der Referenzframe-Indexnummer (refIdx) mit einer frei wählbaren Gewichtung entsprechen; und
einem zweiten Mittel (17) zum Vorhersagen der Bewegungskompensation zum Suchen eines Bewegungsvektors bezüglich eines Frames vor der Kontraktion und des ausgewählten Referenz-Frames vor der Kontraktion, indem an der Peripherie eines Bewegungsvektors gesucht wird, der durch das erste Mittel zum Vorhersagen der Bewegungskompensation erhalten wurde, und Durchführen der Vorhersage der Bewegungskompensation.

7. Vorrichtung zum Vorhersagen der Bewegungskompensation gemäß Anspruch 6, wobei das erste Mittel zum Vorhersagen der Bewegungskompensation angepasst ist, sodass M x N-Pixel in kleinere Blöcke M' x N' (M' ist größer oder gleich 1 und M oder kleiner, N' ist größer gleich 1 und N oder kleiner) unterteilt werden und die Summe der absoluten Differenzen (SAD), die die Evaluierungsindexwerte bilden, als Ergebnis des Blockvergleichs der M' x N'-Blöcke des kontrahierten Frames und des kontrahierten Referenz-Frames erhalten wird.

8. Vorrichtung zum Vorhersagen der Bewegungskompensation gemäß Anspruch 6, wobei das erste Mittel zum Vorhersagen der Bewegungskompensation angepasst ist, sodass M x N-Pixel, die die Einheit der hierarchischen Suche bilden, in kleinere Blöcke M' x N' (M' ist größer oder gleich 1 und M oder kleiner, N' ist größer gleich 1 und N oder kleiner) unterteilt werden und die Summe der orthogonal transformierten absoluten Differenzen (SATD), die Evaluierungsindexwerte bilden, als Ergebnis des Blockvergleichs der M' x N'-Blöcke des kontrahierten Frames und des kontrahierten Referenz-Frames erhalten wird.

9. Vorrichtung zum Vorhersagen der Bewegungskompensation gemäß Anspruch 6, wobei das ersten Mittel zum Vorhersagen der Bewegungskompensation angepasst ist, sodass ein Makroblock von M x N-Pixel, der die Einheit der hierarchischen Suche bildet, in kleinere Blöcke von M' x N'-Pixel (M' ist größer oder gleich 1 und M oder kleiner, N' ist größer gleich 1 und N oder kleiner) unterteilt wird und die Summe der quadrierten Differenzen (SSD), die die Evaluierungsindexwerte bilden, als Ergebnis des Blockvergleichs der M' x N'-Blöcke des kontrahierten Frames und des kontrahierten Referenz-Frames erhalten wird.

10. Vorrichtung zum Vorhersagen der Bewegungskompensation gemäß Anspruch 6, wobei das Mittel zum Bestimmen des Referenz-Frames funktionsbereit ist, sodass es im Falle des Bildes B die Berechnung des Evaluierungsindex der bidirektionalen Vorhersage auf der Basis der Referenz-Frame-Indexnummem (refIdx) durchführt, die anhand entsprechender Listen bestimmt werden, um eine Beurteilung der vorwärts gerichteten Vorhersage, der rückwärts gerichteten Vorhersage und der bidirektionalen Vorhersage durchzuführen.

## Revendications

1. Procédé de prédiction de compensation de mouvement pour effectuer une recherche de vecteur de mouvement en fonction d'une recherche hiérarchique pour chaque bloc de compensation de mouvement respectif, ledit bloc de compensation de mouvement étant un bloc dans l'une d'une pluralité de trames, lesdites trames ayant trait à une pluralité d'images qui sont codées sous la forme de ladite pluralité de trames, le bloc étant associé à un bloc correspondant dans l'une d'une pluralité de trames de référence par un vecteur de mouvement, en désignant pour chacun desdits blocs de compensation de mouvement l'une de ladite pluralité de trames de référence à utiliser en tant que trame de référence pour ledit bloc de compensation de mouvement, le procédé de prédiction de compensation de mouvement comportant :

une étape de réalisation de structure hiérarchique pour générer une trame contractée possédant un facteur de contraction prédéterminé en allégeant les pixels de la trame originale ;
une première étape de prédiction de compensation de mouvement pour chercher un vecteur de mouvement en utilisant la trame contractée générée au cours de l'étape de réalisation de structure hiérarchique et de multiples trames de référence contractées candidates contractées au cours de l'étape de réalisation de structure hiérarchique ;
une étape de détermination de trames de référence pour sélectionner une trame de référence contractée à partir desdites multiples trames de référence contractées candidates pour des blocs de compensation de mouvement respectif à partir de la première étape de compensation de mouvement en déterminant une trame de référence qui présente un coût minimisé entre des blocs de compensation de mouvement respectif correspondants dans ladite trame et ladite trame de référence contractée, ledit coût étant égal à l'une de la somme des différences absolues (SAD), à la somme des différences absolues transformées orthogonalement (SATD), ou à la somme carrée des différences (SSD) obtenue en tant que résultat d'une correspondance de bloc de la trame contractée et de la trame de référence contractée ajoutée à une valeur du nombre indice de trame de référence (refIdx) avec une pondération arbitraire ; et
une seconde étape de prédiction de compensation de mouvement pour rechercher, par rapport à une trame avant contraction, un vecteur de mouvement en recherchant à la périphérie d'un vecteur de mouvement qui a été obtenu au cours de la première étape de prédiction de mouvement chaque bloc de compensation de mouvement respectif par rapport à ladite trame de référence sélectionnée respective et en exécutant une prédiction de compensation de mouvement.

2. Procédé de prédiction de compensation de mouvement selon la revendication 1, dans lequel, au cours de la première étape de prédiction de compensation de mouvement, un macrobloc de M x N pixels est divisé en blocs de taille réduite de M' x N' pixels (M' étant 1 ou plus et M ou moins, N' étant 1 ou plus et N ou moins) et la somme des différences absolues (SAD) qui forment des valeurs d'indice d'évaluation obtenues en tant que résultat de correspondance de bloc des blocs M' x N' de la trame contractée et de la trame de référence contractée.

**3.** Procédé de prédiction de compensation de mouvement selon la revendication 1, dans lequel, au cours de la première étape de prédiction de compensation de mouvement, un macrobloc de M x N pixels est divisé en blocs de M' x N' (M' étant 1 ou plus et M ou moins, N' étant 1 ou plus et N ou moins) et la somme des différences absolues transformées orthogonalement (SATD) qui forment des valeurs d'indice d'évaluation obtenues en tant que résultat de correspondance de bloc des M' x N' blocs de la trame contractée et de la trame de référence contractée.

**4.** Procédé de prédiction de compensation de mouvement selon la revendication 1, dans lequel, au cours de la première étape de prédiction de compensation de mouvement, un macrobloc de M x N est divisé en blocs de taille réduite de M' x N' (M' étant 1 ou plus et M ou moins, N' étant 1 ou plus et N ou moins) et une somme carrée des différences (SSD) qui forment des valeurs d'indice d'évaluation obtenues en tant que résultat d'une correspondance de bloc des blocs M' x N' de la trame contractée et de la trame de référence contractée.

**5.** Procédé de prédiction de compensation de mouvement selon la revendication 1, dans lequel, au cours de l'étape de détermination de trame de référence, dans le cas de l'image B, un calcul d'indice d'évaluation d'une prédiction bidirectionnelle est effectué, en fonction des nombres indices de trame de référence (refIdx) déterminés dans des Listes respectives, pour effectuer une estimation d'une prédiction anticipée, d'une prédiction différée et d'une prédiction bidirectionnelle.

**6.** Appareil de prédiction de compensation de mouvement adapté pour effectuer une recherche de vecteur de mouvement en fonction d'une recherche hiérarchique pour chaque bloc de compensation de mouvement respectif qui est un bloc dans l'une d'une pluralité de trames, lesdites trames ayant trait à une pluralité d'images qui sont codées sous la forme de ladite pluralité de trames et ayant trait à un bloc correspondant dans l'une d'une pluralité de trames de référence pour lesdites pluralités de trames par un vecteur de mouvement, en désignant pour chacun desdits blocs de compensation de mouvement l'une quelconque de ladite pluralité de trames de référence à utiliser comme trame de référence pour ledit bloc de compensation de mouvement, l'appareil de prédiction de compensation de mouvement comportant :

un moyen de réalisation de structure hiérarchique (12) pour générer des trames contractées possédant un facteur de contraction prédéterminé en allégeant les pixels des trames originales ;

un premier moyen de prédiction de compensation de mouvement (14)) pour chercher un vecteur de mouvement en utilisant une trame contractée générée par le moyen de réalisation de structure hiérarchique et de multiples trames de référence candidates contractées par le moyen de réalisation de structure hiérarchique ;

un moyen de détermination de trames de référence (15) pour sélectionner une trame de référence contractée pour des blocs de compensation de mouvement respectifs par le premier moyen de prédiction de compensation de mouvement en déterminant une trame de référence qui présente un coût minimisé entre des blocs correspondants dans ladite trame et ladite trame de référence contractée, ledit coût étant égal à l'une d'une somme des différences absolues (SAD), d'une somme des différences absolues transformées orthogonalement (SATD), ou d'une somme carrée des différences (SSD) obtenue en tant que résultat d'une correspondance de bloc de la trame contractée et de la trame de référence contractée ajoutée à une valeur du nombre indice de trame de référence (refidx) avec une pondération arbitraire ; et

un second moyen de prédiction de compensation de mouvement (17) pour rechercher, par rapport à une trame avant contraction et à ladite trame de référence sélectionnée avant contraction, un vecteur de mouvement en recherchant la périphérie d'un vecteur de mouvement qui a été obtenu par le premier moyen de prédiction de compensation de mouvement et en effectuant une prédiction de compensation de mouvement.

**7.** Appareil de prédiction de compensation de mouvement selon la revendication 6, dans lequel le premier moyen de prédiction de compensation de mouvement est adapté de sorte que M x N pixels sont divisés en blocs de taille réduite de M' x N' pixels (M' étant 1 ou plus et M ou moins, N' étant 1 ou plus et N ou moins) et une somme des différences absolues (SAD) qui forment des valeurs d'indice d'évaluation obtenues en tant que résultat d'une correspondance de bloc des M' x N' blocs de la trame contractée et de la trame de référence contractée.

**8.** Appareil de prédiction de compensation de mouvement selon la revendication 6, dans lequel le premier moyen de prédiction de compensation de mouvement est adapté de sorte que M x N, qui est une unité de recherche hiérarchique, est divisé en blocs de taille réduite M' x N' (M' étant 1 ou plus et M ou moins, N' étant 1 ou plus et N ou moins) et la somme des différences absolues transformées orthogonalement (SATD) qui forment des valeurs d'indice d'évaluation obtenues en tant que résultat d'une correspondance de bloc des M' x N' blocs de la trame contractée et de la trame de référence contractée.

**9.** Appareil de prédiction de compensation de mouvement selon la revendication 6, dans lequel le premier moyen de prédiction de compensation est adapté de sorte que le macrobloc de M x N, qui est une unité de recherche hiérarchique, est divisé en blocs de taille réduite de M' x N' (M' étant 1 ou plus et M ou moins, N' étant 1 ou plus et N ou moins) et la somme carrée des différences (SSD) qui forment des valeurs d'indice d'évaluation obtenues en tant que résultat d'une correspondance de bloc des M' x N' blocs de la trame contractée et de la trame de référence contractée.

**10.** Appareil de prédiction de compensation de mouvement selon la revendication 6, dans lequel le moyen de détermination de trame de référence fonctionne de sorte que, dans le cas de l'image B, il effectue un calcul d'indice d'évaluation d'une prédiction bidirectionnelle en fonction des nombres indices de trames de référence (refldx) déterminés dans des Listes respectives pour effectuer une estimation d'une prédiction anticipée, d'une prédiction différée et d'une prédiction bidirectionnelle.

FIG.1

EP 1 763 252 B1

FIG.2

FIG.3

16 × 16

16 × 8

8 × 16

8 × 8

MACROBLOCK
PARTITION

| 0 |

| 0 |
| 1 |

| 0 | 1 |

| 0 | 1 |
| 2 | 3 |

**FIG.4A**

**FIG.4B**

**FIG.4C**

**FIG.4D**

EP 1 763 252 B1

EP 1 763 252 B1

SUB-MACROBLOCK
PARTITION

8 × 8

| 0 |
|---|

**FIG.5A**

8 × 4

| 0 |
|---|
| 1 |

**FIG.5B**

4 × 8

| 0 | 1 |
|---|---|

**FIG.5C**

4 × 4

| 0 | 1 |
|---|---|
| 2 | 3 |

**FIG.5D**

**FIG.7**

EP 1 763 252 B1

$$H : 1/N$$
$$V : 1/N$$

(1/N² RESOLUTION)

13

11

(FULL RESOLUTION)

FIG.8

MB

PX

# FIG.9

FIG.10

ONE MB

16

16

**FIG.11A**

0

1

2

3

4

16

**FIG.11B**

Start

Preparation of Hierarchical Picture having
Contraction Factor 1/4 every refIdx of respective
Lists — S1

ListX (X = 0) — S2

refIdx = 0 — S3

Block Matching at 16 × 16 Pixel (4 × 4 MB)
On Contracted Image — S4

Storage of SAD Values Every BlkIdx at Point Where
SAD is Minimum Value As the Result of Block Matching — S5

SAD_ListX[refIdx][BlkIdx] — S6

refIdx++ — S7

refIdx = end ?    No
— S8
Yes

Determination of refIdx Serving As
SAD Minimum Value Every BlkIdx at ListX
refIdx_ListX[BlkIdx]
MV_ListX[BlkIdx] — S9

ListX (X = 1) — S10

List1 = True ?    Yes
— S11
No

End

FIG.12

FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004056827 A

### Non-patent literature cited in the description

- **NETRAVLI et al.** A CODEC for HDTV. *IEEE transactions on consumer electronics,* August 1992, vol. 38, 325-340

- **YIN et al.** Fast Mode Decision and Motion Estimation for JVY/H.264. *Proceedings 2003 International Conference on Image Processing,* September 2003, 853-856